# EUROPÄISCHE PATENTANMELDUNG

(11) **EP 4 541 969 A1**
(43) Veröffentlichungstag der Anmeldung: **23.04.2025**
(21) Anmeldenummer: 24205644.8
(22) Anmeldetag: 09.10.2024
(51) Int. Cl.: E02D 29/063

(54) **LAGERFÄHIGES BAUELEMENT MIT INTEGRIERTER ELASTOMERDICHTUNG**

(30) Priorität: 19.10.2023 DE 202023106063 U
(71) Anmelder: Theodor Cordes GmbH & Co. KG, 48308 Senden-Bösensell (DE)
(72) Erfinder: Schlautmann, Frank, 48167 Münster (DE); Höft, Heiko, 21357 Barum (DE)
(74) Vertreter: Patentanwälte Olbricht Buchhold Keulertz

(57) **Zusammenfassung**

Bei einem Bauelement (1), welches ein erstes Bauteil (Rohr 2, Tunneltübbing 9) sowie eine aus einem Elastomerwerkstoff bestehenden Dichtung (3) aufweist, wobei die Dichtung (3) Oberflächenanteile aufweist, die dem Bauteil anliegen, sowie Oberflächenanteile aufweist, die freiliegen, wird vorgeschlagen, dass die freiliegenden Oberflächenanteile der Dichtung (3) wenigstens bereichsweise mit einem Wärmeschutz (8) in der Art versehen sind, dass eine Erwärmung der Dichtung (3), die durch auf die freiliegenden Oberflächenanteile treffende Sonnenstrahlung bedingt ist, reduziert ist.

## Beschreibung

Die Erfindung betrifft ein Bauelement nach dem Oberbegriff des Anspruchs 1.

Die aus einem Elastomerwerkstoff bestehende Dichtung weist ein temperaturabhängiges Alterungsverhalten auf. Im Gebrauch des Bauelements sind die Dichtungen in vielen Fällen vor atmosphärischen Einflüssen wie UV-, Ozon- oder Temperaturbelastungen geschützt, beispielsweise wenn es sich um im Erdreich befindende Bauelemente handelt, wie dies beispielsweise bei Kanalisations- oder vergleichbaren erdverlegten Rohren oder auch bei Tunnelbauteilen wie z.B. Tunneltübbingen der Fall ist.

In vielen Fällen sind in der Praxis Dichtungen üblich, die Rußpartikel enthalten, um die an eine Dichtung gestellten Anforderungen erfüllen zu können. Weiterhin ist es aus der Praxis bekannt, Bauelemente in Serie zu fertigen und zunächst zu lagern. Aufgrund der jeweiligen Abmessungen der Bauelemente ist es daher bei vielen Anwendungsfällen bekannt, die Bauelemente nicht witterungsgeschützt in einer Halle, sondern im Freien zu lagern. Dies gilt insbesondere für Bauelemente, die grundsätzlich unempfindlich gegen Witterungseinflüsse sind, wie dies beispielsweise bei Bauelementen der Fall ist, die im Wesentlichen aus einem Betonbauteil bestehen. Weiterhin ist es aus der Praxis in vielen Fällen bekannt, die Bauteile bereits während des Herstellungsprozesses oder im Anschluss an den Herstellungsprozess mit der Dichtung zu versehen und dann zusammen mit der Dichtung als praktisch einsatzfertiges Bauelement zu lagern. Dies betrifft beispielsweise Betonrohre oder Tunneltübbinge, in welche die Dichtungen nach Herstellung des Betonteils eingesetzt werden oder die bereits während der Herstellung des Betonteils mit einer integrierten Dichtung versehen werden, also einer Dichtung, die mit dem Betonwerkstoff formschlüssig verzahnt und somit unlösbar mit diesem verbunden ist.

Bei der Lagerung im Freien kann die Einstrahlung von Sonnenlicht, welches auf die mittels der Rußpartikel dunkel eingefärbt Dichtung trifft, zu einer erheblichen Erwärmung der Dichtung führen. Die gewünschten Eigenschaften der Dichtung, beispielsweise ihre Elastizität, nimmt alterungsbedingt ab, und aufgrund des temperaturabhängigen Alterungsverhaltens bedeutet dies, dass bereits während der Lagerung des Bauelements, noch vor dessen Einsatz im Gebrauch, die Dichtung vorzeitig altern kann.

Ein praxisüblicher Test zur Alterungsbeständigkeit der Dichtung besteht darin, eine Dichtung über einen Zeitraum von 7 Tagen einer Temperatur von 70 °C und mehr auszusetzen. Bei einer Einsatztemperaturerhöhung um 10 °C verringert sich die Lebensdauer der Dichtung erfahrungsgemäß annähernd um die Hälfte.

Bei der Lagerung im Freien können in der Dichtung Temperaturen von etwa 70 °C erreicht werden, zudem trifft die Sonneneinstrahlung oft nur auf einen Umfangsabschnitt der Dichtung, so dass die Dichtung inhomogen altert.

Der Erfindung liegt die Aufgabe zugrunde, ein gattungsgemäßes Bauelement dahingehend zu verbessern, dass dessen Dichtung auch bei einer Lagerung des Bauelements im Freien möglichst wenig altert.

Diese Aufgabe wird durch ein Bauelement nach Anspruch 1 gelöst. Vorteilhafte Ausgestaltungen sind in den Unteransprüchen beschrieben.

Die Erfindung schlägt mit anderen Worten vor, die Dichtung vor Wärme zu schützen, und zwar betrifft dies die freiliegenden Oberflächenanteile der Dichtung, die nicht dem Bauteil selbst anlegen, sondern vielmehr der Sonneneinstrahlung ausgesetzt sein können. Die Erfindung geht in diesem Zusammenhang von der Überlegung aus, dass ein Schutz gegen das ohnehin herrschende Temperaturniveau der Umgebung kaum möglich ist und ein Wärmeschutz daher insbesondere die Wärmewirkung betreffen sollte, die durch die Einstrahlung des Sonnenlichts verursacht wird. Die verschiedenen nachfolgend beschriebenen Maßnahmen können dabei jeweils einzeln verwirklicht werden, aber auch in Kombination, um einen besonders guten Schutz für die Dichtung gegen eine unerwünschte vorzeitige Alterung zu bewirken.

In einer ersten Ausgestaltung betrifft die Maßnahme, den Wärmeschutz zu verwirklichen, die Möglichkeit, das Auftreffen der Sonnenstrahlung auf den dunklen Elastomerwerkstoff zu verhindern. Eine Variante dieser ersten Ausgestaltung besteht darin, die zu schützenden Oberflächenanteile der Dichtung mit einer reflektierenden Beschichtung zu versehen. Dies betrifft insbesondere die Reflexionseigenschaft der Beschichtung, Wärmestrahlung zu reflektieren. Da grundsätzlich jedes Material Strahlung reflektiert, in unterschiedlichem Ausmaß, wird dies nicht eigens erwähnt. Vielmehr wird im Rahmen des vorliegenden Vorschlags ein Material ausdrücklich als reflektierend bezeichnet, dessen Reflexionsgrad für die Wärmestrahlung höher ist als das nicht beschichtete Material der Dichtung. Beispielsweise kann auch ein ansonsten gleicher Werkstoff, wie er für die übrige Dichtung verwendet wird, dann als reflektierender Werkstoff genutzt werden, wenn er heller ist, zum Beispiel weiß oder hellgrau, und somit einen höheren Reflexionsgrad als der ansonsten gleiche, jedoch die erwähnten Rußpartikel enthaltende Werkstoff. Als Wärmestrahlung wird im Rahmen des vorliegenden Vorschlags der Strahlungsanteil des Sonnenlichts verstanden, der entweder unmittelbar als Wärme empfunden wird, wie z.B. die IR-Strahlung, oder der beim Auftreffen auf eine unbeschichtete Dichtung innerhalb der Dichtung in Wärme umgewandelt wird.

Die reflektierende Beschichtung wird in einer Ausgestaltung durch ein streichfähiges Material geschaffen, beispielsweise einen Lack, insbesondere einen hellen, z. B. weißen, silbernen oder grauen Lack, der auf die freiliegenden Dichtungsbereiche aufgestrichen werden kann. In einer anderen Ausgestaltung kann die reflektierende Schicht durch ein separates Element geschaffen werden, beispielsweise aus Papier oder aus Kunststoff, welches zugunsten einer einfachen Montage selbstklebend ausgerüstet sein kann. Als Klebstoff kommt dabei ein Haftkleber zum Einsatz, also ein vergleichsweise schwach kleben des Material, so dass die reflektierende Beschichtung vor dem Einsatz des ab an einer Baustelle problemlos entfernt werden kann.

Eine andere Variante dieser ersten Ausgestaltung besteht darin, dass die der Sonnenstrahlung möglicherweise ausgesetzten Oberflächenanteile der Dichtung aus einem anderen Material bestehen als übrigen Anteile der Dichtung, nämlich aus einem strahlungsreflektierenden Material. Da die Dichtungen insbesondere größerer Bauelemente üblicherweise nicht als Formteile gegossen werden, sondern vielmehr als Strangprofile hergestellt werden, beispielsweise extrudiert werden, können die unterschiedlichen Materialien coextrudiert werden, so dass bei der Herstellung der Dichtung kein zusätzlicher Verfahrensschritt erforderlich wird, um die strahlungsreflektierenden Oberflächenbereiche zu schaffen.

Eine zweite Ausgestaltung des Bauelements sieht vor, den Kern des Dichtungsquerschnitts mittels einer thermischen Barriere vor übermäßiger Erwärmung zu schützen. Als thermischen Barriere wird dabei ein Material mit geringer Wärmeleitung bezeichnet. Diese thermische Barriere bildet in einer Variante dieser zweiten Ausgestaltung die Oberfläche der Dichtung, beispielsweise mittels Coextrusion. In einer anderen Variante ist die thermische Barriere im Inneren des Dichtungsmaterials angeordnet, so dass die äußere Oberfläche, insbesondere der dichtungswirksame Bereich der Dichtungsoberfläche, mit welchem die Dichtung im Gebrauch einem benachbarten Bauelement anliegt, beispielsweise aus einem üblichen Elastomerwerkstoff bestehen kann, wie er aus der Praxis bekannt und bewährt ist. Die thermische Barriere hingegen kann beispielsweise aus einem porösen Material bestehen, welches für eine dichtungswirksame Anlage an einem benachbarten Bauelement weniger geeignet ist, oder sie können aus einem Material bestehen, welches gegenüber äußeren Einflüssen empfindlicher ist als der übrige Elastomerwerkstoff der Dichtung, und welches dementsprechend durch diesen Elastomerwerkstoff, der das Material der thermischen Barriere umhüllt, vor diesen äußeren Einflüssen schützt.

In einer Ausgestaltung wird die thermische Barriere durch einen Füllstoff geschaffen, der dem Elastomerwerkstoff der Dichtung zugegeben ist, so dass der Elastomerwerkstoff eine verringerte Wärmeleitung aufweist. Das so geschaffene Material mit verringerter Wärmeleitung kann entweder benutzt werden, um wie bei dem oben erwähnten Coextrusionsverfahren Zonen der Dichtung mit verringerter Wärmeleitfähigkeit zu schaffen, oder die Dichtung kann insgesamt aus einem solchen Material verringerter Wärmeleitfähigkeit bestehen, so dass durch dieses verwendete Dichtungsmaterial die Kerntemperatur in der Dichtung auch bei Sonneneinstrahlung möglichst niedrig gehalten wird.

Wenn die thermische Barriere an der äußeren Oberfläche der Dichtung vorgesehen ist, kann sie gleichzeitig auch reflektierende Eigenschaften aufweisen. Ein aufklebbarer Materialstreifen beispielsweise kann aus einem hellen Schaumwerkstoff bestehen, so dass er so wohl einen hohen Anteil der Wärmestrahlung aufgrund seiner hellen Farbgebung reflektiert als auch durch seine geringe Wärmeleitfähigkeit den Dichtungswerkstoff durch seine Wärmedämmungseigenschaft schützt. Ein aufklebbarer Materialstreifen kann auch mehrschichtig aufgebaut sein und an seiner äußeren Oberfläche, dem zu erwartenden Sonnenlicht zugewandt, eine Schicht mit hohem Reflexionsvermögen aufweisen und darunter, zum Elastomerwerkstoff der Dichtung hin, eine Schicht mit hoher Wärmedämmwirkung. Eine aufstreichbare Beschichtungsmasse kann beispielsweise aus zwei Komponenten angerührt werden und aufschäumen, so dass sie sowohl aufgrund ihrer hellen Farbgebung gute wärmereflektierende Eigenschaften aufweist als auch aufgrund ihrer Hohlräume eine möglichst geringe Wärmeleitung und somit gute Wärmedämmeigenschaften aufweist.

Insbesondere wenn die Dichtung als integrierte Dichtung ausgestaltet ist, wie dies für Betonbauteile wie Rohre oder Tunneltübbinge bekannt ist, kann das betreffende Bauelement vorteilhaft vorschlagsgemäß ausgestaltet sein, weil keine Möglichkeit besteht, die Dichtung erst kurz vor dem Einsatz des Bauelements zu montieren. Vielmehr ist die Dichtung untrennbar mit dem Betonbauteil verbunden und wird daher zwangsläufig auch zusammen mit dem Betonbauteil gelagert, bis das gesamte Bauelement zum Einsatz gelangen soll.

In einer Ausgestaltung besteht das vorschlagsgemäße Bauelement im Wesentlich aus einem Betonwerkstoff, beispielsweise aus einem bewehrten Beton wie z.B. aus Stahlbeton. Aufgrund der hohen Witterungsbeständigkeit des Betonwerkstoffs ist die Lagerung solcher Bauelemente im Freien üblich, so dass bei derartigen Bauelementen die vorzeitige Alterung der Dichtung aufgrund der Sonnenstrahlung, welcher die Dichtung im Freien ausgesetzt ist, eine besonders hohe Gefahr für die Dichtung darstellt.

Der vorliegende Vorschlag ist bei allen Bauelementen anwendbar, die mit Dichtungen versehen sind und im Freien gelagert werden. Dies können beispielsweise Fassadenbauteile sein, wie sie im Hochbau verwendet werden. Insbesondere für im Tiefbau verwendete Bauelemente stellt der vorliegende Vorschlag eine vorteilhafte Ausgestaltung des Bauelements dar, weil diese Bauelemente später, im Gebrauch, praktisch unsichtbar im Erdreich angeordnet sind und daher für eine Lagerung im Freien prädestiniert sind, denn Witterungseinflüsse, welche äußerliche Spuren an den Bauelementen hinterlassen, z.B. Verschmutzungen oder dergleichen, stellen für die Verwendbarkeit der Bauelemente keinen Nachteil dar. Ein vorschlagsgemäßes Bauelement kann daher insbesondere vorteilhaft als Rohr oder als Tunneltübbing ausgestaltet sein, also als Bauelement, welches für die Verlegung im Erdreich vorgesehen ist.

Die Erfindung wird nachfolgend anhand der rein schematischen Zeichnungen näher erläutert. Dabei zeigt
- Fig. 1: einen Teilquerschnitt durch den Dichtungsbereich eines ersten Ausführungsbeispiels eines Betonrohrs,
- Fig. 2: eine Ansicht ähnlich Fig. 1 für ein zweites Ausführungsbeispiel eines Betonrohrs, und
- Fig. 3: eine Ansicht ähnlich Fig. 1, jedoch durch einen Ausschnitt eines Tunneltübbings.

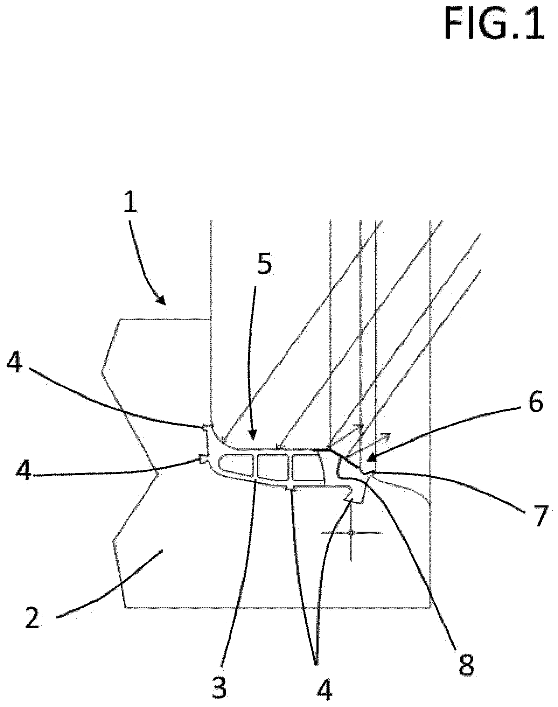

Fig. 1 zeigt ausschnittsweise ein Bauelement 1, das ein erstes Bauelement in Form eines Rohrs 2 aufweist. Das Rohr 2 besteht aus einem Betonwerkstoff und weist ein Muffenende auf, das mit einer integrierten Dichtung 3 versehen ist, die mit mehreren Verankerungsfüßen 4 in dem Betonwerkstoff des Rohrs 2 verankert ist. Das Bauelement 1 ist dazu bestimmt, liegend im Erdreich verlegt zu werden, wobei das Spitzende eines benachbarten, gleichartigen Bauelements 1 in dem dargestellten Muffenende aufgenommen wird. Die integrierte Dichtung 3 bildet daher erstens ein elastisches Stützlager 5, auf dem das Spitzende des benachbarten Bauelements 1 aufliegt und welches geringfügige Relativbewegungen zwischen den beiden Betonrohren aufnehmen kann, z.B. auch Winkelabweichungen, und zweitens einen Dichtungsabschnitt 6, der zur Anlage an dem benachbarten Betonrohr bestimmt ist und eine Dichtlippe 7 aufweist.

Mit etwas mehr als der Hälfte ihrer gesamten Oberfläche liegt die Dichtung 3 dem Rohr 2 an. Zum inneren des Rohrs 2 hin weist die Dichtung 3 jedoch freiliegende Oberflächenanteile auf, die später im Gebrauch des Bauelements 1 zumindest teilweise mit dem erwähnten benachbarten Betonrohr in Kontakt kommt. Diese freiliegenden Oberflächenanteile sind, wenn das Bauelement 1 im Freien gelagert wird, der Sonneneinstrahlung ausgesetzt. Davon ausgehend, dass das Bauelement 1 liegend im Freien gelagert wird, sind insbesondere im unteren Umfangsbereich der Dichtung 3 deren freiliegenden Oberflächenanteile einer direkten Sonneneinstrahlung ausgesetzt, während andere, höher liegende Umfangsabschnitte der Dichtung 3 zumindest einer indirekten, reflektierten Strahlung ausgesetzt sind.

Die Dichtung 3 ist mit einem Wärmeschutz 8 versehen, der bei dem dargestellten Ausführungsbeispiel auf den Bereich des Dichtungsabschnitts 6 begrenzt ist. Der Wärmeschutz 8 befindet sich an der äußeren Oberfläche des Dichtungsabschnitts 6 und kann beispielsweise durch einen Anstrich aus einem reflektierenden Material, oder durch einen aufgeklebten Streifen aus reflektierendem Material gebildet sein, oder er kann in Form eines coextrudierten Abschnitts aus einem reflektierenden Material ausgestaltet sein.

Durch Pfeile ist die Sonneneinstrahlung angedeutet, die auf das liegend lagernde Bauelement 1 und insbesondere auf dessen Dichtung 3 auftrifft. Im Bereich des Stützlagers 5 wird die eintreffende Strahlung großteils von dem Elastomerwerkstoff der Dichtung 3 absorbiert und trägt zu einer Erwärmung der Dichtung 3 bei. Die auf den Wärmeschutz 8 auftreffenden Sonnenstrahlen hingegen werden reflektiert, so dass in dem für die Abdichtung des Bauelements 1 relevanten Dichtungsabschnitt 6 eine unerwünschte vorzeitige Alterung der Dichtung 3 vermieden oder zumindest verringert wird.

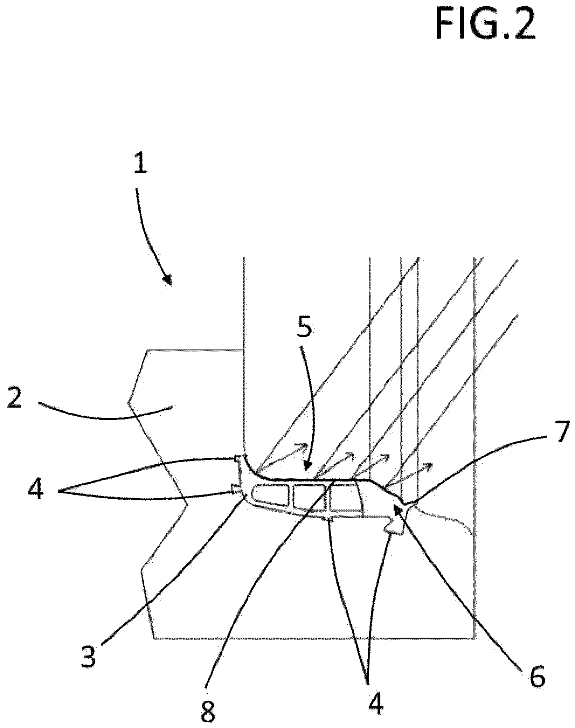

Fig. 2 zeigt in einer Ansicht ähnlich Fig. 1 ein zweites Ausführungsbeispiel eines Bauelements 1, bei welchem sowohl das Rohr 2 als auch die Dichtung 3 grundsätzlich wie bei dem ersten Ausführungsbeispiel der Fig. 1 ausgestaltet sind. Der Wärmeschutz 8 allerdings erstreckt sich bei diesem zweiten Ausführungsbeispiel nicht nur über die freiliegenden Oberflächenanteile des Dichtungsabschnitts 6, sondern auch über die des Stützlagers 5.

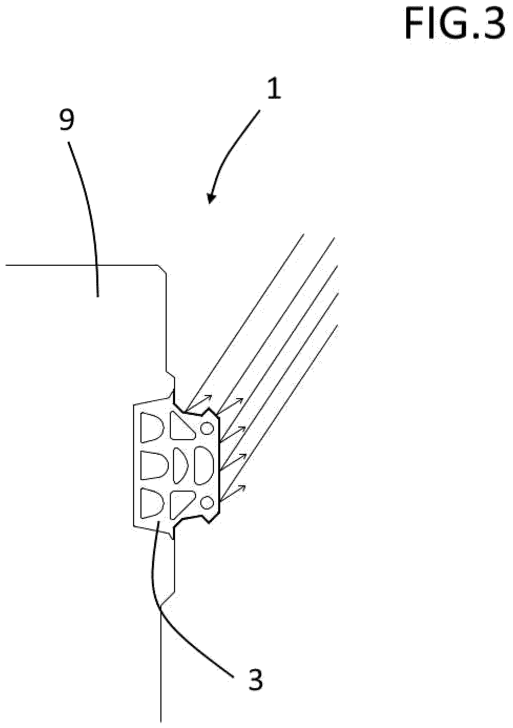

Fig. 3 zeigt ausschnittsweise ein Bauelement 1 in Form eines Tunneltübbings 9 aus Beton, in den eine umlaufende Dichtung 3 eingelegt ist. Bei diesem Ausführungsbeispiel sind ähnlich wie bei dem Ausführungsbeispiel der Fig. 2 sämtliche freiliegenden Oberflächenanteile der Dichtung 3 mit einem Wärmeschutz 8 versehen, der eine Oberflächenschicht auf der Dichtung 3 bildet. Die mittels einiger Pfeile symbolisierte Sonnenstrahlung wird an der Wärmeschutzschicht reflektiert und so das Temperaturniveau in der Dichtung 3 möglichst niedrig gehalten.

### Bezugszeichen:

- 1: Bauelement
- 2: Rohr
- 3: Dichtung
- 4: Verankerungsfuß
- 5: Stützlager
- 6: Dichtungsabschnitt
- 7: Dichtlippe
- 8: Wärmeschutz
- 9: Tunneltübbing

## Patentansprüche

1. Bauelement (1),
welches ein erstes Bauteil (Rohr 2, Tunneltübbing 9) sowie eine aus einem Elastomerwerkstoff bestehenden Dichtung (3) aufweist,
wobei die Dichtung (3) Oberflächenanteile aufweist, die dem Bauteil anliegen, sowie Oberflächenanteile aufweist, die freiliegen,
**dadurch gekennzeichnet,**
**dass** die freiliegenden Oberflächenanteile der Dichtung (3) wenigstens bereichsweise mit einem Wärmeschutz (8) in der Art versehen sind, dass eine Erwärmung der Dichtung (3), die durch auf die freiliegenden Oberflächenanteile treffende Sonnenstrahlung bedingt ist, reduziert ist.

2. Bauelement nach Anspruch 1,
**dadurch gekennzeichnet,**
**dass** die freiliegenden Oberflächenanteile der Dichtung (3) wenigstens bereichsweise mit einer die Wärmestrahlung reflektierenden Beschichtung versehen sind.

3. Bauelement nach Anspruch 2,
**dadurch gekennzeichnet,**
**dass** die reflektierende Beschichtung aus einem streichfähigen Beschichtungsmaterial hergestellt ist.

4. Bauelement nach Anspruch 2,
**dadurch gekennzeichnet,**
**dass** die reflektierende Beschichtung selbstklebend mit einem Haftkleber ausgestaltet ist.

5. Bauelement nach einem der vorhergehenden Ansprüche, **dadurch gekennzeichnet,**
**dass** die freiliegenden Oberflächenanteile der Dichtung (3) wenigstens bereichsweise aus einem strahlungsreflektierenden Material bestehen.

6. Bauelement nach einem der vorhergehenden Ansprüche,
**dadurch gekennzeichnet,**
**dass** den freiliegenden Oberflächenanteilen der Dichtung (3) eine die Wärmeleitung ins Innere der Dichtung (3) reduzierende thermische Barriere zugeordnet ist.

7. Bauelement nach Anspruch 6,
**dadurch gekennzeichnet,**
**dass** die thermische Barriere im Abstand von den freiliegenden Oberflächenanteilen im Inneren der Dichtung (3) angeordnet ist.

8. Bauelement nach einem der vorhergehenden Ansprüche, **dadurch gekennzeichnet,**
**dass** der Elastomerwerkstoff einen die Wärmeleitfähigkeit der Dichtung (3) herabsetzenden Füllstoff enthält.

9. Bauelement nach einem der vorhergehenden Ansprüche, **dadurch gekennzeichnet,**
**dass** der Wärmeschutz (8) auf die freiliegenden Oberflächenanteile beschränkt ist, die zur dichtungswirksamen Anlage an einem benachbarten Bauelement (1) bestimmt sind.

10. Bauelement nach einem der vorhergehenden Ansprüche,
**dadurch gekennzeichnet,**
**dass** die Dichtung (3) als in das Bauelement (1) integrierte, unlösbar in dem ersten Bauteil verankerte Dichtung (3) ausgestaltet ist.

11. Bauelement nach einem der vorhergehenden Ansprüche,
**dadurch gekennzeichnet,**
**dass** das Bauelement (1) im Wesentlichen aus einem Betonwerkstoff besteht.

12. Bauelement nach einem der vorhergehenden Ansprüche,
**dadurch gekennzeichnet,**
**dass** das Bauelement (1) als Rohr (2) ausgestaltet ist.

13. Bauelement nach einem der vorhergehenden Ansprüche,
**dadurch gekennzeichnet,**
**dass** das Bauelement (1) als Tunneltübbing (9) ausgestaltet ist.
